# EUROPEAN PATENT APPLICATION

(11) **EP 2 549 760 A2**
(43) Date of publication of application: **23.01.2013**
(21) Application number: 11185917.9
(22) Date of filing: 20.10.2011
(51) Int. Cl.: H04N 13/00

(54) **Method for improving three-dimensional display quality**

(30) Priority: 19.07.2011 TW 100125462
(71) Applicant: Acer Incorporated, New Taipei City 221 (TW)
(72) Inventor: Ko, Chueh-Pin, 221 New Taipei City Chinese Taipei (TW)
(74) Representative: Becker Kurig Straus

(57) **Abstract**

A method for improving three-dimensional (3D) display quality is provided. A first image data and a second image data for 3D display are associated with a single eye (left eye or right eye). A third state associated with both eyes is generated by analyzing a data difference between the first image data and the second image data. Thereby, the flickering problem can be resolved and image quality, brightness, and resolution can be improved.

## Description

### BACKGROUND OF THE INVENTION

### 1. Field of the Invention

The invention generally relates to a three-dimensional (3D) display technique, and more particularly, to a method for improving 3D display quality.

### 2. Description of Related Art

Nowadays, three-dimensional (3D) display is becoming more and more prevalent. 3D imaging and display techniques are categorized into glasses 3D techniques and glassless 3D techniques. Glasses 3D techniques can be further categorized into shutter 3D techniques and polarized 3D techniques. Shutter 3D techniques and polarized 3D techniques respectively have their own advantages and disadvantages. However, none of existing glasses 3D techniques can offer the advantages of both shutter and polarized 3D techniques. For example, shutter glasses offer high resolution but are expensive, flicker-prone, easily interfered by infrared rays, and offer low 3D display brightness, while polarized glasses are less expensive, non-flickering, free of infrared interference, and offer high 3D display brightness but offer only half the resolution of that offered by shutter glasses.

In a conventional 3D display technique, each 3D image data is theoretically considered an independent left-eye's view or an independent right-eye's view. When the image data is played, images from different viewing angles are accepted by the left and right eyes of a viewer and combined into 3D images with depth information in the viewer's brain. Thus, a stereo vision is produced. However, since none of existing techniques optimizes the image data, even though these techniques are very simple, the flickering problem in the shutter glasses cannot be resolved and the low resolution offered by the polarized glasses cannot be improved.

Generally speaking, every existing design is based on either left-eye's view only or right-eye's view only. Namely, data representing a left-eye's view is shown to the left eye of a viewer at one moment, and data representing a right-eye's view is shown to the right eye of the viewer at another moment. The frequency for a single eye to receive images is approximately 50Hz or 60Hz. Flickering may be sensed by a viewer if the image update frequency is not high enough. Thus, one may feel dizzy or fatigued after viewing 3D images.

How to resolve the flickering problem and improve 3D display quality to reduce viewer discomfort has become a major subject in the industry.

### SUMMARY OF THE INVENTION

Accordingly, the invention is directed to a three-dimensional (3D) display technique. In the 3D display technique, a first image data and a second image data for 3D display are associated with a single eye (a left eye or a right eye), and a third state associated with both eyes is generated by analyzing a data difference between the first image data and the second image data, wherein the pixels in the third state are used for generating a double-eye vision to a viewer. Thereby, the flickering problem can be resolved and the image quality, brightness, and resolution can be improved.

The invention is directed to a method for improving 3D display quality. The method includes following steps. An original image data is converted into a first image data and a second image data, wherein pixels in the first image data and the second image data at same coordinates are respectively indicated as P1(Z1) and P2(Z2), Z1 and Z2 respectively indicate a first state and a second state, the pixel in the first state is used for generating a left-eye vision to a viewer, and the pixel in the second state is used for generating a right-eye vision to the viewer. The pixel P1(Z1) and the pixel P2(Z2) are analyzed, wherein if a data difference between the pixel P1(Z1) and the pixel P2(Z2) is smaller than a threshold, the pixel P1(Z1) is changed to P1(Z3) or the pixel P2(Z2) is changed to P2(Z3), or the pixels P1(Z1) and P2(Z2) are respectively changed to P1(Z3) and P2(Z3), wherein Z3 indicates a third state, and the pixel in the third state is used for generating a double-eye vision to the viewer.

The invention further provides a method for improving 3D display quality. The method includes following steps. An original image data is converted into a first image data and a second image data, wherein the first image data and the second image data are respectively a matrix having M*N pixels, pixels in the i^{th} rows and the j^{th} columns of the first image data and the second image data are respectively indicated as P1(i, j, Z1) and P2(i, j, Z2), i and j are integers, 1 ≦ i ≦ M, 1 ≦ j ≦ N, Z1 and Z2 respectively indicate a first state and a second state, the pixel in the first state is used for generating a left-eye vision to a viewer, and the pixel in the second state is used for generating a right-eye vision to the viewer. The pixel P1(i, j, Z1) and the pixel P2(i, j, Z2) in the i^{th} rows and the j^{th} columns are analyzed, wherein if a data difference between the pixel P1(i, j, Z1) and the pixel P2(i, j, Z2) is smaller than a threshold, the pixel P1(i, j, Z1) is changed to P1(i, j, Z3) or the pixel P2(i, j, Z2) is changed to P2(i, j, Z3), or the pixels P1(i, j, Z1) and P2(i, j, Z2) are respectively changed to P1(i, j, Z3) and P2(i, j, Z3), wherein Z3 indicates a third state, and the pixel in the third state is used for generating a double-eye vision to the viewer.

The invention further provides a method for improving 3D display quality. The method includes following steps. Whether to directly convert a corresponding pixel in a 2D frame of a 2D depth data into an image data in a third state is determined according to depth information of the 2D depth data, wherein the image data in the third state is used for generating a double-eye vision to a viewer. If the corresponding pixel is not in the third state, an image data of the corresponding pixel in the 2D frame is converted into an image data of a left-eye vision and an image data of a right-eye vision according to the depth information of the 2D depth data.

According to an embodiment of the invention, the method for improving 3D display quality further includes following steps. The original image data is converted into a third image data, wherein the third image data is a matrix having M*N pixels, the pixel in the i^{th} row and the j^{th} column of the third image data is indicated as P3(i, j, Z1), wherein i and j are integers, 1 ≦ i ≦ M, 1 ≦ j ≦N, and Z1 indicates the first state. Image contents of the pixel P2(i, j, Z2) and the pixel P3(i, j, Z1) in the i^{th} rows and the j^{th} columns are analyzed, wherein if a data difference between the pixel P2(i, j, Z2) and the pixel P3(i, j, Z1) is smaller than the threshold, the pixel P3(i, j, Z1) is changed to P3(i, j, Z3).

As described above, in the method provided by the invention, a third state associated with both eyes is generated, and pixels in the third state are distributed in analyzed image data. Thereby, the flickering problem can be resolved and the image quality, brightness, and resolution can be improved in 3D display

These and other exemplary embodiments, features, aspects, and advantages of the invention will be described and become more apparent from the detailed description of exemplary embodiments when read in conjunction with accompanying drawings.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1A is a flowchart of a method for improving three-dimensional (3D) display quality according to an embodiment of the invention.

FIG. 1B is a flowchart of a method for improving 3D display quality according to another embodiment of the invention.

FIG. 2 is a flowchart of a method for adjusting a 3D image class according to an embodiment of the invention.

FIG. 3 is a flowchart of a method for adjusting a 3D information class according to an embodiment of the invention.

FIG. 4A is a diagram illustrating image data generated in step S 110 in FIG. 1 according to an embodiment of the invention.

FIG. 4B is a diagram illustrating image data generated in step S 120 in FIG. 1 according to an embodiment of the invention.

FIG. 5 is a diagram illustrating the adjustment of a left and a right image.

FIG. 6 is a diagram illustrating the adjustment of two images at different time points.

FIGs. 7-9 are diagrams illustrating the control of three blocks according to an embodiment of the invention.

FIG. 10 is a diagram of 3D output according to an embodiment of the invnetion.

FIG. 11 is a diagram illustrating the output of a pre-definition method, in which a pixel is converted into a surface result.

FIG. 12 is a diagram of a barrier 3D according to an embodiment of the invention.

FIG. 13 is a structural diagram of 3D display according to an embodiment of the invention.

FIG. 14 is a diagram of a 3D display data surface according to an embodiment of the invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

Existing three-dimensional (3D) original image data can be categorized into 3D image class and 3D information class. Image data of the 3D image class may be full frame data. Image data of the 3D information class may be the 3D content of a Blu-ray disc, wherein the 3D content is a multi-view video coding (MVC) data. Besides, image data of the 3D information class may also be 2D+depth data. Thus, a first image data and a second image data for left /right-eye's views can be generated according to a 3D original image data, wherein the left-eye's view and the right-eye's view are independent to each other.

In a conventional 3D display technique, each image data is associated with a single eye of a viewer. Namely, an image data is either the data of a left-eye's view or the data of a right-eye's view, and there is no data of double-eye's view

### Define Three States

The present embodiment provides a pixel-based adjustment method for improving 3D display quality. First, the purposes of three states are defined. Pixels in the first state are used for generating a left-eye vision, pixels in the second state are used for generating a right-eye vision, and pixels in the third state are used for generating a double-eye vision. The third state is different from the first state and the second state, and pixels in the third state are used for presenting data in both eyes of a viewer. In addition, pixels in the first to the third state can be indirectly presented in a viewer's vision through 3D glasses. Herein the 3D glasses may be 3D active glasses or 3D passive glasses. However, the invention is not limited thereto.

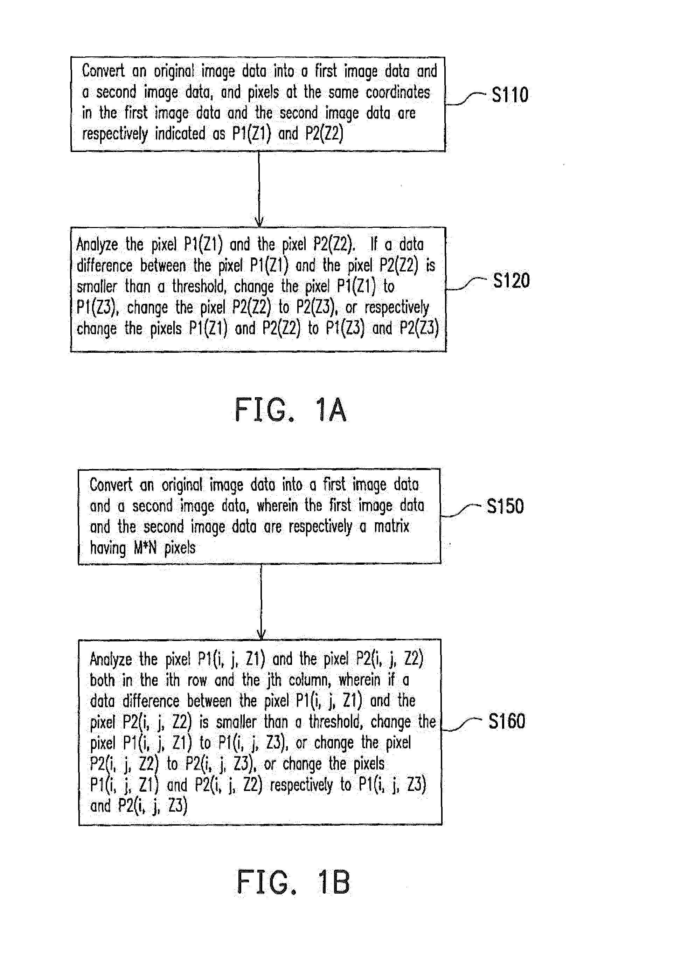

FIG. 1A is a flowchart of a method for improving 3D display quality according to an embodiment of the invention. Referring to FIG. 1A, in step S110, an original image data is converted into a first image data and a second image data. Pixels in the first image data and the second image data at same coordinates are respectively indicated as P1(Z1) and P2(Z2), wherein Z1 and Z2 respectively indicate the first state and the second state, the pixel P1(Z1) in the first state is used for generating a left-eye vision to the viewer, the pixel P2(Z2) in the second state is used for generating a right-eye vision to the viewer. It should be noted that the first image data and the second image data can be defined as left-eye data and right-eye data at the same time (in the image format of top and button (TnB) or side-by₋side (SbS)) or left-eye data and right-eye data at different time. However, the invention is not limited thereto.

Then, in step S120, the pixel P1(Z1) and the pixel P2(Z2) are analyzed. If a data difference between the pixel P1(Z1) and the pixel P2(Z2) is smaller than a threshold, the pixel P1(Z1) is changed to P1(Z3), or the pixel P2(Z2) is changed to P2(Z3), or the pixels P1(Z1) and P2(Z2) are respectively changed to P1(Z3) and P2(Z3), wherein Z3 indicates the third state, and the pixel in the third state is used for generating a double-eye vision to the viewer.

FIG. 1B is a flowchart of a method for improving 3D display quality according to another embodiment of the invention. Referring to FIG. 1B, in step S150, an original image data is converted into a first image data and a second image data. The first image data and the second image data are respectively a matrix having M*N pixels, pixels in the i^{th} rows and the j^{th} columns of the first image data and the second image data are respectively indicated as P1(i, j, Z1) and P2(i, j, Z2), wherein i and j are integers, 1 ≦ i ≦ M, 1 ≦ j ≦ N, and Z1 and Z2 respectively indicate a first state and a second state. The pixel P1(i, j, Z1) in the first state is used for generating a left-eye vision to a viewer, and the pixel P2(i, j, Z2) in the second state is used for generating a right-eye vision to the viewer. The pixel P1(i, j, Z1) and the pixel P2(i, j, Z2) may be left-eye data and right-eye data displayed on a display at the same time. Or, the pixel P1(i, j, Z1) and the pixel P2(i, j, Z2) may also be left-eye data and right-eye data respectively displayed on a display at different time.

Next, in step S160, the pixel P1(i, j, Z1) and the pixel P2(i, j, Z2) in the i^{th} rows and the j^{th} columns are analyzed. If a data difference between the pixel P1(i,j, Z1) and the pixel P2(i, j, Z2) is smaller than a threshold, the pixel P1(i,j, Z1) is changed to P1(i, j, Z3), or the pixel P2(i, j, Z2) is changed to P2(i, j, Z3), or the pixels P1(i, j, Z1) and P2(i, j, Z2) are respectively changed to P1(i, j, Z3) and P2(i, j, Z3), wherein Z3 indicates a third state, and the pixel in the third state is used for generating a double-eye vision to the viewer.

The original image data may be full frame data, MVC data of a Blu-ray disc, or 2D+depth data. However, the invention is not limited thereto. Herein a MVC data is the compressed data of a primary image and the compressed data of a secondary image, wherein a complete 2D left-eye image can be generated by using the compressed data of the primary image, while a 2D right-eye image can only be generated by using the compressed data of both the secondary image and the primary image. In other embodiments, the 2D depth data is first converted into a left-eye image data and a right-eye image data, and an image data in the third state Z3 is then generated according to the left-eye image data and the right-eye image data. In the present embodiment, depth information of the 2D depth data is analyzed, and whether to directly convert a corresponding pixel in a 2D frame of the 2D depth data into the third state Z3 is determined according to the depth information of the 2D depth data. If the corresponding pixel is not in the third state Z3, an image data of the corresponding pixel in the 2D frame is converted into image data of a left-eye vision and image data of a right-eye vision according to the depth information.

For example, if the depth information indicates that the depth of a specific pixel is within a predetermined range or the gray scale value of the pixel in a depth map is within a specific predetermined range, the corresponding pixel in the 2D frame is directly converted into an image data in the third state Z3. If the gray scale value of the pixel in the depth map is not within the predetermined range, the image data of the pixel in the 2D frame is converted into image data of a left-eye vision and image data of a right-eye vision for 3D display according to depth data (gray scale value) of the pixel in the depth map. Thus, in the present embodiment, the original image data can be converted into a first image data and a second image data according to an existing conversion format.

### Method for Adjusting 3D Image Class

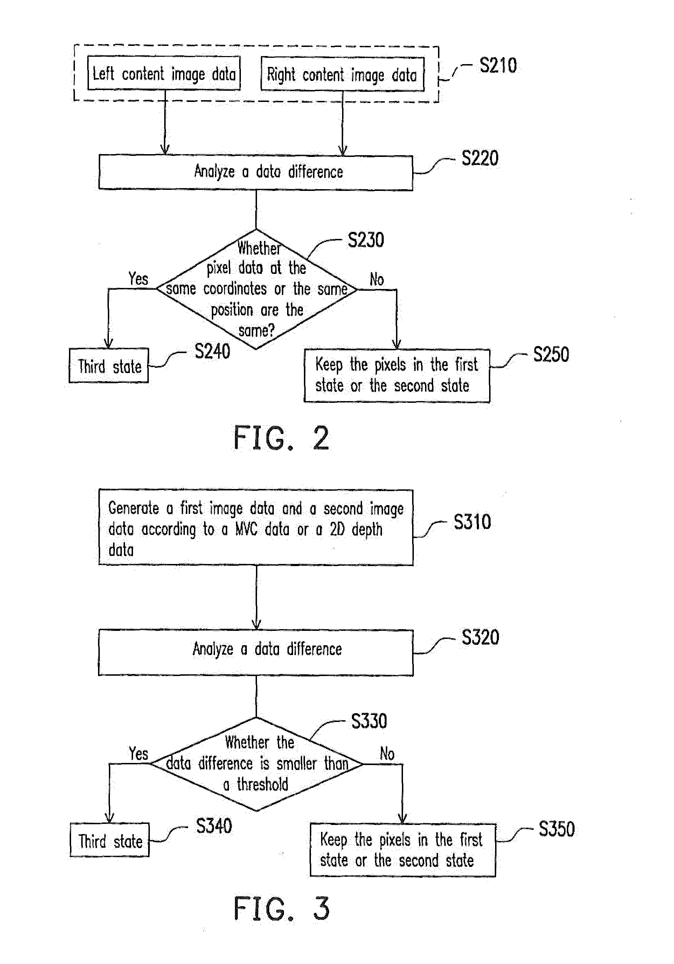

FIG. 2 is a flowchart of a method for adjusting 3D image class according to an embodiment of the invention. Referring to FIG. 2 and descriptions related to the embodiment illustrated in FIG. 1, in step S210, if the original image data is a full frame data, a left content image data and a right content image data are generated, wherein the left content image data and the right content image data are respectively equivalent to the first image data and the second image data in FIG. 1. In step S220, data difference analysis is performed by using a similarities and dissimilarities analyzer, wherein the similarities and dissimilarities analyzer can be implemented as a scalar or a timing controller displayed in an image or as a software along with an operation circuit. In step S230, a pixel P1(Z1) in the first image data and a pixel P2(Z2) in the second image data are analyzed, or a pixel P1(i, j, Z1) and a pixel P2(i, j, Z2) both in the i^{th}rows and the j^{th} columns are analyzed.

If in step S230 it is determined that the data difference between the pixel P1(Z1) and the pixel P2(Z2) is smaller than a threshold (for example, the two pixel data are the same), step S240 is executed to change the pixel P1(Z1) to P1(Z3), change the pixel P2(Z2) to P2(Z3), or change the pixels P1(Z1) and P2(Z2) respectively to P1(Z3) and P2(Z3). In another embodiment, if it is determined in step S230 that the data difference between the pixel P1(i, j, Z1) and the pixel P2(i, j, Z2) is smaller than a threshold (for example, the two pixel data are the same), step S240 is executed to change the pixel P1(i, j, Z1) to P1(i, j, Z3), change the pixel P2(i, j, Z2) to P2(i, j, Z3), or change the pixels P1(i, j, Z1) and P2(i, j, Z2) respectively to P1(i, j, Z3) and P2(i, j, Z3). If it is determined in step S230 that the two pixel data at the same coordinates are not the same (i.e., the data difference between the two pixel data is greater than the threshold), step S250 is executed, in which the pixels remain in their original first state or second state. Herein Z1-Z3 respectively indicate the first to the third state, and the pixel in the third state is used for generating a double-eye vision to the viewer.

### Method for Adjusting 3D Information Class

FIG. 3 is a flowchart of a method for adjusting 3D information class according to an embodiment of the invention. Referring to FIG. 3 and descriptions related to the embodiment illustrated in FIG. 1, in step S310, if the original image data is a MVC data or a 2D depth data, a first image data and a second image data are generated according to an existing conversion format. In step S320, a data difference analysis is performed by using a similarities and dissimilarities analyzer, wherein the similarities and dissimilarities analyzer can be implemented as a scalar or a timing controller displayed in an image or as a software along with an operation circuit. In step S330, a pixel P1(i, j, Z1) and a pixel P2(i, j, Z2) both in the i^{th} rows and the j^{th} columns are analyzed. If the data difference between the two pixels is smaller than a threshold, step S340 is executed to change the pixel P1(i, j, Z1) to P1(i, j, Z3) or the pixel P2(i, j, Z2) to P2(i, j, Z3). If the data difference between the two pixels exceeds the threshold, step S350 is executed, in which the pixels remain at their original first state or second state. Herein Z1-Z3 respectively indicate the first to the third state, and the pixel in the third state is used for generating a double-eye vision to the viewer.

### About Luminance Unit of the Three Primary Colors

Commission Internationale de l'éclairage (CIE) specifies that the wavelengths of the primary red, green, and blue colors are respectively 700nm, 546.1nm, and 435.8nm. In the color matching experiment, an equal-energy white light is obtained when the relative luminance ratio of the three primary colors is 1.0000:4.5907:0.0601. Thus, CIE uses this ratio as the per-unit quantity of the red, green, and blue primary colors (i.e., (R):(G):(B) = 1:1:1). Even though herein the three primary colors have different luminance, CIE treats the luminance of each primary color as a unit, so that a white light is obtained in the additive color mixing process by mixing the red, green, and blue primary colors in equal proportion (i.e., (R)+(G)+(B) = (W)).

### About DeltaE

DeltaE is usually used for describing the slightest color and hue variation detectable to human eyes. DeltaE specifies a range tolerable to human perception. Generally, a deltaE variation between 3 and 6 units is acceptable. The color effects within different deltaE ranges are different. For example, if deltaE = 1.6-3.2 units, the color variation is not detectable to human eyes. If deltaE = 3.2-6.5 units, the color variation can only be detected by professionally trained printers. If deltaE = 6.5-13 units, the color variation can be detected but the hue variation is still not detectable. If deltaE = 13-25 units, different hues and color dependencies can be identified. If deltaE exceeds 25 units, a totally different color is presented.

### About Threshold Range

In the third state, whether pixel data is different can be determined through analysis or detection. For example, whether the content of a pixel at an original position is updated or maintained, and the threshold may be a gray scale variation within a specific gray scale range. Thus, the two pixel data can be considered the same if following conditions are met in the step of analyzing the pixel P1(i, j, Z1) and the pixel P2(i, j, Z2): (1) when the gray scale variations of the two pixels are smaller than 10 gray scale units; (2) when the luminance variations of the two pixels are smaller than 5 luminance units; (3) when the deltaE of the two pixels are smaller than 1 deltaE unit. It should be noted that the present implementation is only an example but not intended to limit the invention. The two pixel data may be considered the same if only one or two of foregoing conditions are met, or the range of the gray scale variation, the luminance variation, or deltaE may be changed according to the actual design requirement.

### About a plurality of Pixel-Based Image Data

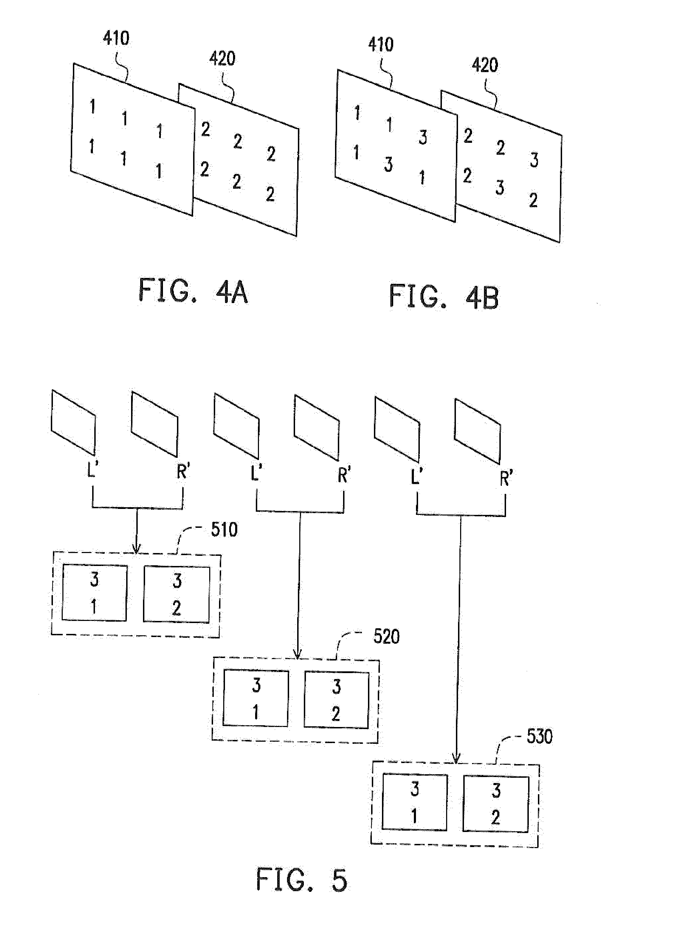

FIG. 4A is a diagram illustrating the image data generated in step S110 in FIG. 1 according to an embodiment of the invention. Referring to FIG. 4A, in the present embodiment, in order to indicate the pixel state in each image data, the digits 1, 2, and 3 are used for indicating the first state, the second state, and the third state. In step S110, a plurality of image data (for example, a first image data 410 and a second image data 420) is generated. All the pixels of the first image data 410 are in the first state. Namely, the first image data 410 is a left-eye's view and is used for generating a left-eye vision to a viewer when it is played. All the pixels of the second image data 420 are in the second state. Namely, the second image data 420 is a right-eye's view and is used for generating a right-eye vision to the viewer when it is played.

After the first image data 410 and the second image data 420 in FIG. 4A are analyzed in step S120, some pixels in the pixel matrixes may be changed to the third state Z3. FIG. 4B is a diagram illustrating the image data generated in step S120 in FIG. 1 according to an embodiment of the invention. Referring to FIG. 4B, pixels of the first image data 410 are in the first state and the third state, and pixels of the second image data 420 are in the second state and the third state. Contents of pixels in the third state can be presented in both the left and the right eyes of the viewer. It should be noted that the pixel matrixes and distributions of the image data are not limited to those described in the present embodiment. When some pixels of the first image data 410 are in the third state, the first image data 410 presents a double-eye mixed vision when it is played. Or, when some pixels of the second image data 420 are in the third state, the second image data 420 presents the double-eye mixed vision when it is played. Namely, the pixels in the first state (marked with "1" in FIG. 4B) are used for generating a left-eye vision (a single eye vision), the pixels in the second state (marked with "2" in FIG. 4B) are used for generating a right-eye vision (a single eye vision), and the pixels in the third state (marked with "3" in FIG. 4B) are used for generating a double-eye vision. In the present embodiment, some pixels of the first image data 410 or the second image data 420 may be in the third state. Thus, the double-eye mixed vision helps to improve the image quality, brightness, and resolution and resolve the flickering problem and bring comfort to the viewer when 3D images are displayed.

### Adjustment of Left and Right Images

When a first image data and a second image data are respectively the left-eye's view and the right-eye's view of a same image, the operation of analyzing the pixel P1(i, j, Z1) and the pixel P2(i, j, Z2) both in the i^{h} rows and the j^{th}columns is equivalent to adjusting a left and a right image or adjusting a light and a left image.

In addition, a left and a right image can be adjusted through the technique described in following embodiment. An original image data is converted into a first image data, a second image data, a third image data, and a fourth image data, wherein the first image data and the second image data are a first set of left and right eye image data, and the third image data and the fourth image data are a second set of left and right eye image data. Pixels in the first image data and the second image data having the same coordinates are respectively indicated as P1(Z1)and P2(Z2), wherein Z1 and Z2 respectively indicate the first state and the second state. Pixels in the third image data and the fourth image data at the same coordinates are respectively indicated as P3(Z1) and P4(Z2). The pixel P3(Z1) and the pixel P2(Z2) are analyzed. If a data difference between the pixel P2(Z2) and the pixel P3(Z1) is smaller than a threshold, the pixel P3(Z1) is changed to P3(Z3). Or, the pixel P4(Z2) and the pixel P1(Z1) are analyzed. If a data difference between the pixel P1(Z1) and the pixel P4(Z2) is smaller than the threshold, the pixel P4(Z2) is changed to P4(Z3).

FIG. 5 is a diagram illustrating the adjustment of a left and a right image. Referring to FIG. 5, in the present embodiment, the first image data is indicated as L', the second image data is indicated as R', and the first image data L' and the second image data R' belonging to the same set are used for generating a left-eye vision and a right-eye vision, so as to bring a 3D sensation to a viewer. In FIG. 5, the digits 1, 2, and 3 are used for indicating the states (first state, second state, and third state) of pixels in each image data. A set of image data is generated after the left-eye image data L' and the right-eye image data R' are analyzed. For example, referring to FIG. 5, an image data set 510 is generated after the first set of image data L' and R' are analyzed, an image data set 520 is generated after the second set of image data L' and R' are analyzed, and an image data set 530 is generated after the third set of image data L' and R' are analyzed. Taking the image data set 510 as an example, the analyzed image data set 510 has two image data. The first (left) image data in the image data set 510 is converted from the first left-eye image data L' in FIG. 5. Thus, the first image data in the image data set 510 is a sub-frame composed of pixels in both the first state and the third state. The second (right) image data in the image data set 510 is converted from the first right-eye image data R' in FIG. 5. Thus, the second image data in the image data set 510 is a sub-frame composed of pixels in both the second state and the third state. Since each set of image data contains pixels in the third state, each set of image data presents a double-eye mixed vision when it is played. It should be noted that the states of pixels in each set of image data are not limited to those described in the present embodiment. In addition, the adjusted image data may be played as a combination of a pure left-eye's view and a pure right-eye's view.

### Adjustment of Two Images at Different Time Points

In the present embodiment, the first image data and the second image data respectively represent images at different time points. Foregoing operation of analyzing the pixel P1(Z1) and the pixel P2(Z2) at the same coordinates and different time points is equivalent to adjusting two images at different time points. Similarly, when the second image data represents a set of images and the first image data represents a next set of images, the operation of analyzing the pixel P2(Z2) and the pixel P1(Z1) at the same coordinates and different time points is equivalent to adjusting two images at different time points.

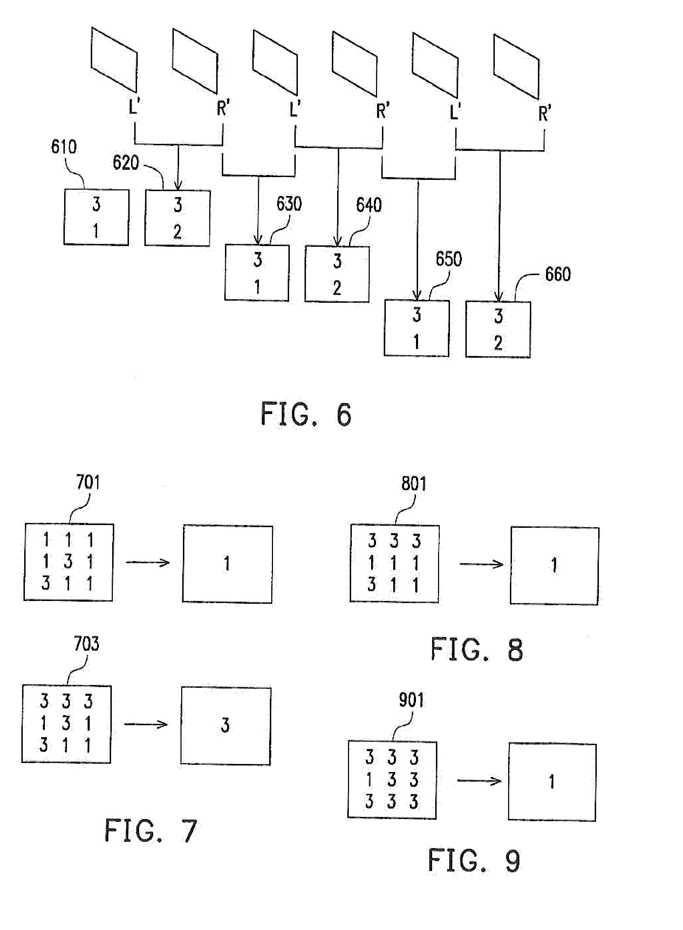

FIG. 6 is a diagram illustrating the adjustment of two images at different time points. In the present embodiment, a left-eye image data is indicated as L', a right-eye image data is indicated as R', and the left-eye image data L' and the right-eye image data R' belonging to the same set are used for generating a left-eye vision and a right-eye vision, so as to bring a 3D sensation to a viewer. In FIG. 6, the digits 1, 2, and 3 are used for indicating the states (first state, second state, and third state) of pixels in each image data. A set of image data is generated after images at different time points are analyzed. The two images may be a left-eye image data L' and a right-eye image data R' of the same set or a right-eye image data R' and a left-eye image data L' of different sets. In other embodiments, the two images may also be two right-eye image data R' or two left-eye image data L' of different sets.

For example, image data 610 and 620 are generated after analyzing the first diamond frame (a left-eye image data L') and the second diamond frame (a right-eye image data R') in FIG. 6 (starting from left). The image data 610 is converted from the first diamond frame (the left-eye image data L') in FIG. 6. Thus, the image data 610 is a sub-frame composed of pixels in both the first state and the third state. The image data 620 is converted from the second diamond frame (the right-eye image data R') in FIG. 6. Thus, the image data 620 is a sub-frame composed of pixels in both the second state and the third state. An image data 630 is generated after analyzing the second diamond frame (the right-eye image data R') and the third diamond frame (a left-eye image data L') in FIG. 6. The image data 630 is converted from the third diamond frame (the left-eye image data L') in FIG. 6. Thus, the image data 630 is a sub-frame composed of pixels in both the first state and the third state. Similarly, the image data 640 is converted from the fourth diamond frame (a right-eye image data R') after analyzing the third diamond frame (the left-eye image data L') and the fourth diamond frame (the right-eye image data R'), the image data 650 is converted from the fifth diamond frame (a left-eye image data L') after analyzing the fourth diamond frame (the right-eye image data R') and the fifth diamond frame (the left-eye image data L'), and the image data 660 is converted from the sixth diamond frame (a right-eye image data R') after analyzing the fifth diamond frame (the left-eye image data L') and the sixth diamond frame (the right-eye image data R').

FIG. 6 illustrates multiple image data 610-660, wherein every two of the image data constitute a set of image data. As shown in FIG. 6, the image data 610 and 620 are the first set of image data, the image data 630 and 640 are the second set of image data, and the image data 650 and 660 are the third set of image data. Herein the image data 620, 640, and 660 are image data adjusted according to their positions, and the image data 610, 630, and 650 are image data adjusted according to their time sequence. It should be noted that in the present embodiment, the image data can be grouped according to their position, their time sequence, or a combination of position and time sequence to be adjusted, Since the operation speed on image data grouped according to their time sequence is faster than that on image data grouped according to their position, the technical effect of the third state in FIG. 4B can be obtained more easily by adjusting two images at different time points.

### Adjustment of a Left and a Right Image and Two Images at Different Time Points

The method for adjusting a left and a right image and two images at different points includes following steps. An original image data is converted into a third image data, wherein the third image data is also a matrix having M*N pixels, the pixel in the i^{th} row and the j^{th} column of the third image data is indicated as P3(i, j, Z1), i and j are integers, 1 ≦ i ≦ M, 1 ≦ j ≦ N, and Z1 indicates a first state. The image contents of the pixel P2(i, j, Z2) and the pixel P3(i, j, Z1) both in the i^{th} rows and the j^{th} columns are analyzed. If the data difference between the pixel P2(i, j, Z2) and the pixel P3(i, j, Z1) is smaller than a threshold, the pixel P3(i, j, Z1) is changed to P3(i, j, Z3), and the analyzed and adjusted third image data contains pixels in the third state.

### About the Threshold Range of the Data Difference between the Pixel P2(i, j, Z2) and the Pixel P3(i, j, Z1)

Foregoing two pixel data are considered the same if following conditions are met in the step of analyzing the pixel P2(i, j, Z2) and the pixel P3(i, j, Z1): (1) when the gray scale variations of the two pixels are smaller than 10 gray scale units; (2) when the luminance variations of the two pixels are smaller than 5 luminance units; (3) when the deltaE of the two pixels are smaller than 1 deltaE unit. Please note that the present embodiment is only an example but not intended to limit the invention. The two pixel data may be considered the same if only one or two of foregoing conditions are met, or the range of the gray scale variation, the luminance variation, or deltaE may be changed according to the actual design requirement.

Referring to FIG. 6 again, in the present embodiment, the image data 620, 640, and 660 are image data adjusted according to their positions, and the image data 630 and 650 are image data adjusted according to their time sequence. Because both a left and a right image and two images at different time points are adjusted, the first image data and the second image data are respectively the left-eye's view and the right-eye's view of a same image, and the third image data is the left-eye's view of a next image. In this case, the operation of analyzing the pixel P1(i, j, Z1) and the pixel P2(i, j, Z2) is equivalent to adjusting a left and a right images, and the operation of analyzing the pixel P2(i, j, Z2) and the pixel P3(i, j, Z1) is equivalent to adjusting two images at different time points.

Similarly, the first image data and the second image data are respectively the right-eye's view and the left-eye's view of a same image, and the third image data is the right-eye's view of a next image. Thus, the operation of analyzing the pixel P1(i, j, Z1) and the pixel P2(i, j, Z2) is equivalent to adjusting a right and a left image, and the operation of analyzing the pixel P2(i, j, Z2) and the pixel P3(i, j, Z1) is equivalent to adjusting two images at different time points.

### Various Adjustment Techniques

In a pixel-based adjustment technique, except those pixels having their gray scales unchanged, the gray scale variation between two pixels is smaller than 10 (for example, 6), or the total gray scale variation within three frame range is smaller than 10, the pixel is set to the third state. Thus, the third state can be determined by using the image variation itself or at least three image variations.

In the adjustment of 3D information class, a 3D image composed of pixels in the first to the third states can be converted through a specific depth data method or pre-load pixel comparison.

In the depth data method, an area having a specific depth is defined to be in the third state, and other areas are sequentially defined to be in the first state and the second state. Or, a specific range (the depth is smaller than 10).

In the pre-load pixel comparison, the variation of each image before and after depth information is loaded is determined. The third state can be entered as long as the image variation is within a specific range (for example, the gray scale is within 10 units; the luminance is smaller than 5 luminance units, or the deltaE is smaller than 1 deltaE unit). The technical details of this technique can be referred to the similarities and dissimilarities analyzer of the 3D image class in FIG. 2.

Regarding the conversion using a similarities and dissimilarities analyzer of 3D information class or a depth-to-state transfer, a depth data method and a pre-load pixel comparison method can be adopted. The depth data method is to compare 2D image data and depth data to generate depth data having the third state. The pre-load pixel comparison method is to generate a left image data (i.e., the first image data) and a right image data (i.e., the second image data) having the third state according to 2D image data and depth data.

### 3D Display of Pixels in the Third State

Analyzed and adjusted image data is corresponding to different 3D displays and display techniques. Pixels of each image data may be in the first state, the second state, or the third state. The output methods include a pre-definition method and a direct analysis method.

In the pre-definition method, when a specific pixel is indicated as Pixel(R, G, B), the content and state of the pixel is then indicated as Pixel(R, G, B, StateX), wherein the state StateX = 1, 2, or 3.

In the direct analysis method, Block(N) = StateX, wherein the state StateX = 1, 2, or 3, and the adjusted pixel is indicated as Pixel"(R,G,B). A pixel group at plurality of spatial positions constitutes a block. In the block, a plurality of Pixel(R, G, B, StateX) is first adjusted and then converted through the pre-definition method. The state of the entire block can be determined by averaging the pixels in the block, through analysis of spatial proportions of the pixels in the block, by calculating states of corresponding pixels in frames at different time points (similar to the method adopted by a similarities and dissimilarities analyzer).

The analyzed and adjusted image data can be used in polarized 3D technique and naked-eye 3D technique. The control of polarization is carried out in unit of block (composed of a plurality of pixels). Even though a block has a plurality of pixels, the pixels in only one state can be controlled. FIGs. 7-9 are diagrams illustrating the control of three blocks according to an embodiment of the invention. In FIGs. 7-9, a first sate, a second state, and a third state of different pixels are respectively indicated by the digits 1-3.

In FIG. 7, the state corresponding to more than half of the pixels is considered a main state. A block is composed of a plurality of pixels. Referring to the upper half of FIG. 7, when the state corresponding to more than half of the pixels in the block 701 is the first state Z1, the entire block 701 is used for providing a left-eye vision to a viewer, so that a control unit corresponding to the block 701 in the active polarization layer (or a controllable polarization layer) is turned into the first state (for example, a polarization direction of 135°). Similarly, when the state corresponding to more than half of the pixels in the block is the second state Z2, the entire block is used for providing a right-eye vision to the viewer, so that the control unit corresponding to the block in the active polarization layer is turned into the second state (for example, a polarization direction of 45°). Referring to the lower half of FIG. 7, when the state corresponding to more than half of the pixels in the block 703 is the third state Z3, the entire block 703 is used for providing a double-eye vision to the viewer, so that the control unit corresponding to the block 703 in the active polarization layer is turned into the third state (for example, a polarization direction of 90°). Thus, the states of all the pixels in the block 701 are further changed to the first state Z1, and the states of all the pixels in the block 703 are further changed to the third state Z3.

FIG. 8 illustrates a space center method. The block 801 is composed of a plurality of pixels. When the pixel at the center of the block 801 is in the first state, the entire block 801 is used for providing a left-eye vision to a viewer, so that the states of all the pixels in the block 801 are further changed to the first state Z1. Accordingly, the control unit corresponding to the block 801 in the active polarization layer is turned into the first state. Similarly, when the pixel at the center of the block is in the second state, the entire block is used for providing a right-eye vision to the viewer, so that the states of all the pixels in the block are further changed to the second state Z2. When the pixel at the center of the block is in the third state, the entire block is used for providing a double-eye vision to the viewer, so that the states of all the pixels in the block are further changed to the third state Z3.

FIG. 9 illustrates a state method. Referring to FIG. 9, the block 901 is composed of a plurality of pixels. When at least one of the pixels in the block 901 is in the first state Z1, the entire block 901 is used for providing a left-eye vision to a viewer, so that the states of all the pixels in the block 901 are further changed to the first state Z1. Accordingly, the control unit corresponding to the block 901 in the active polarization layer is turned into the first state. Similarly, when at least one of the pixels in a block is in the second state Z2, the entire block is used for providing a right-eye vision to the viewer, so that the states of all the pixels in the block are further changed to the second state Z2. When all the pixels in a block are in the third state, the entire block is used for providing a double-eye vision to the viewer.

Additionally, images in the third state, the first state, and the second state can be respectively finely tuned to enhance the 3D visual effect. For example, regarding an image composed of pixels in the first state, the second state, and the third state, the display characteristic of a pixel can be adjusted according to a first image adjustment data combination (image profile) or a second image adjustment data combination. Aforementioned display characteristic may be luminance, contrast, and/or color saturation. In some embodiments, the first image adjustment data combination can increase the contrast and color saturation of pixels in the first state and the second state and reduce the brightness thereof, and the second image adjustment data combination can increase the brightness of pixels in the third state.

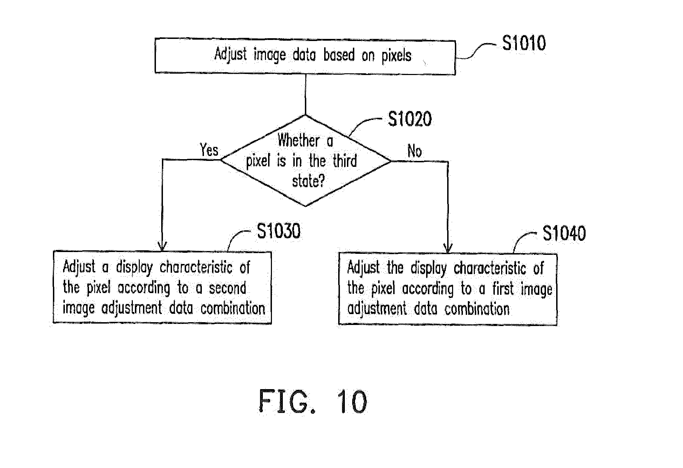

FIG. 10 is a diagram of 3D output according to an embodiment of the invnetion. In step S1010, an image data is adjusted based on pixels. In step S1020, whether a pixel is in the third state is determined. If the pixel is in the third state, step S1030 is executed, in which a display characteristic of the pixel is adjusted (for example, the brightness of a third state pixel is increased) according to a second image adjustment data combination. If the pixel is not in the third state, step S1040 is executed, in which the display characteristic of the pixel is adjusted (for example, increase the contrast and color saturation of pixels in the first state and the second state and reduce the brightness thereof) according to a first image adjustment data combination. However, the output method in the invention is not limited thereto. For example, general image adjustment parameters include skin color, gamma, and a specific color axis, etc., and an image is adjusted according to the pixel content of the image so as to change the corresponding values of the red, green, and blue primary colors.

### Output of Pre-definition Method

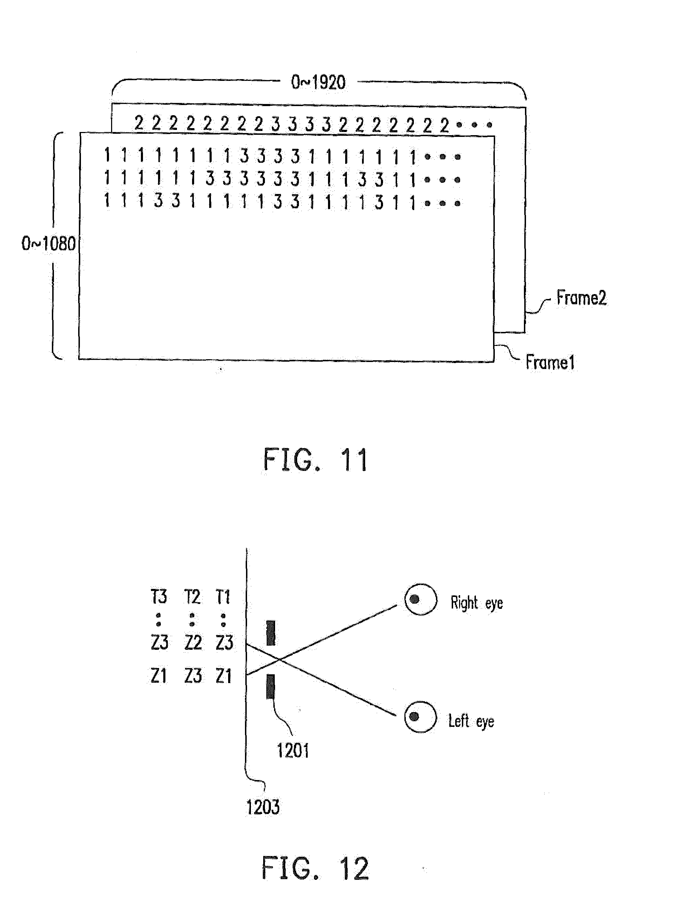

FIG. 11 is a diagram illustrating the output of a pre-definition method, in which a pixel is converted into a surface result. Referring to FIG. 11, a converter is adopted in the system, and the state StateX of each pixel in each image data is re-distributed so that the pixel can be easily converted into a surface result. Herein the image data Frame 1 (x 0 to 1920, y = 0 to 1080, t = 1), the image data Frame2 (x = 0 to 1920, y = 0 to 1080, t = 2), State(x, y, t) = X, and X = 1/2/3.

### Output of Direct Analysis Method

In the direct analysis method, Block(N) = StateX, wherein X = 1/2/3, and the adjusted pixel is indicated as Pixel"(R, G, B). The states of different blocks are sequentially loaded into foregoing expression. If the corresponding position of a block has been pre-defined, 3D control units can be directly controlled without any converter.

Regarding different 3D techniques, the result is sent to a position converter to be analyzed, and a control signal is input into a 3D state controller to control each pixel. Moreover, if the 3D state controller has the same state at different time point, no output is done in order to increase the response speed of the system and reduce the power consumption of the system.

### 3D Mode (Mixed Timing Mode) of Pixel-based Image Data

A pixel-based mode having the third state mixed in the left and right image data is referred to as a mixed timing mode. The mixed timing mode can be applied to any existing 3D display technique, such as the polarized glasses 3D technique and various naked-eye 3D techniques. The mixed timing mode may be implemented differently. If the first image data is assumed to be a pure left image or a left image based on the first image adjustment data combination, the second image data is then a pure right image or a right image based on the first image adjustment data combination.

FIG. 12 is a diagram of a barrier 3D according to an embodiment of the invention. At the time point T1, the right and left eyes of the viewer respectively detect pixels in the first state Z1 and pixels in the third state Z3 in the liquid crystal display (LCD) layer 1203 through the barrier 1201. At the time point T2, the right and left eyes of the viewer respectively detect pixels in the third state Z3 and pixels in the second state Z2 in the LCD layer 1203 through the barrier 1201. At the time point T3, the right and left eyes of the viewer respectively detect pixels in the first state Z1 and pixels in the third state Z3 in the LCD layer 1203 through the barrier 1201.

The technique described in foregoing embodiment can be applied to a naked-eye 3D barrier or liquid crystal lens. For example, the technique can be applied to the ultra 3D liquid crystal (LC) lens manufactured by AUO, in which a display with a high refresh rate (greater than 100Hz to 120Hz) is adopted. As to a naked-eye 3D technique, regional (or pixel) 3D and 2D switch control needs to be performed. A region of a display provided by AUO can be used for 2D display. Thus, the left-eye's view and right-eye's view in the original 3D region can be directly used as a left-eye's view and a right-eye's view in the 2D region, while the original 2D region can be used for displaying a double-eye mixed vision.

Compared to an image data in a conventional technique, an image data analyzed and adjusted based on pixels can almost achieve its full native resolution. Besides, because the brightness detected by another eye is gradually increased, the image quality can be improved.

### Pixel-Based Application on Display (Mixed Timing Mode)

The pixel-based analysis result can be used in polarization 3D technique and naked-eye 3D technique for two purposes: to generate a third state and provide an image content, wherein the polarized 3D technique may be an active polarizer, and the naked-eye 3D technique may be a barrier and a LC lens.

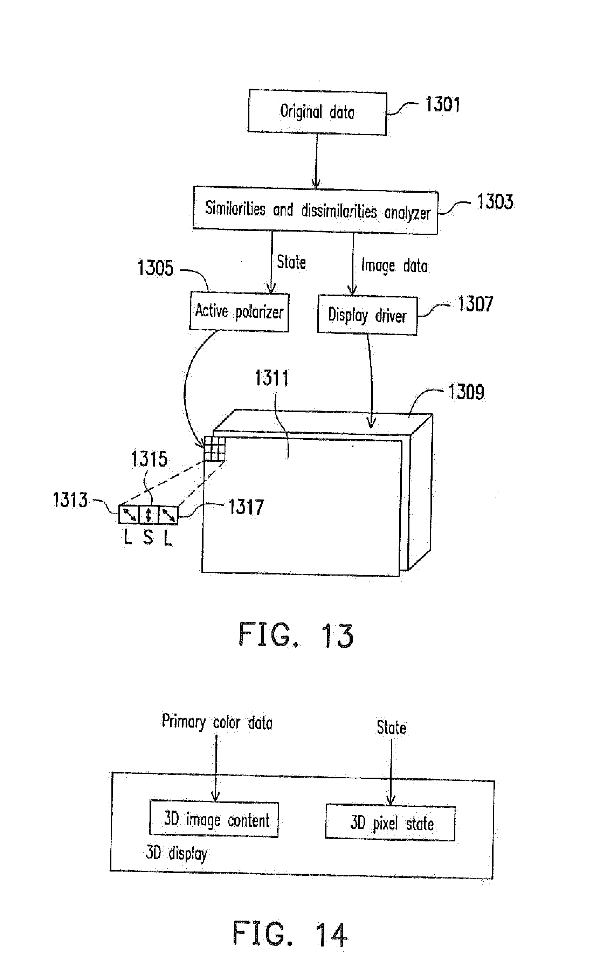

FIG. 13 is a structural diagram of 3D display according to an embodiment of the invention. Referring to FIG. 13, an image displayed by the LCD layer 1309 is detected by a viewer through an active polarization layer 1311, and the viewer enjoys the image displayed by the LCD layer 1309 by wearing a pair of polarized glasses. Herein it is assumed that the polarization direction of the left lens of the polarized glasses is 135°, and polarization direction of the right lens is 45°. An original data 1301 is analyzed and adjusted by the similarities and dissimilarities analyzer 1303, so that image data is output to the display driver 1307 and pixel states are output to the active polarizer 1305. The display driver 1307 may include a timing controller, a source driver, and a gate driver. However, the invention is not limited thereto. The display driver 1307 can output pixel data in the image data to the corresponding pixels of the LCD layer 1309.

The active polarizer 1305 controls the polarization direction of the active polarization layer 1311. For example, the polarization direction of the control unit 1313 is set to 135° such that a left-eye vision L is produced to the the viewer through the polarized glasses. Or, the polarization direction of the control unit 1315 is set to 90° such that a double-eye vision S is produced to the viewer through the polarized glasses. Or, the polarization direction of the control unit 1317 is set to 135° such that a left-eye vision L is produced to the viewer through the polarized glasses. Thus, the polarized light emitted by the control units 1313 and 1317 passes through the left lens of the polarized glasses but does not pass through the right lens thereof (because the angle between the polarization directions of the two is 90°). Because the polarization direction of the polarized light emitted by the control unit 1315 forms an angle of 45° with the polarization direction of the left lens and the polarization direction of the polarized light emitted by the control unit 1315 forms an angle of 45° with the polarization direction of the right lens, part of the polarized light emitted by the control unit 1315 passes through the left lens and the right lens of the polarized glasses.

When a next image is displayed, the polarization direction of the control units 1313 and 1317 may be set to 45° such that the a right-eye vision R is produced to the viewer through the polarized glasses, and the polarization direction of the control unit 1315 is set to 90° such that a double-eye vision S is produced to the viewer through the polarized glasses. Thus, the polarized light emitted by the control units 1313 and 1317 passes through the right lens of the polarized glasses but does not pass through the left lens thereof A part of the polarized light emitted by the control unit 1315 passes through the left lens and the right lens of the polarized glasses.

FIG. 14 is a diagram of a 3D display data surface according to an embodiment of the invention. Referring to FIG. 14, the image data contains pixels in the 3D state, and the primary color data (red, green, and blue) in the image data provides 3D image content. A modulatable 3D state unit (for example, a 3D state controller, an active polarizer, a barrier, or a LC lens) can be adopted in the technique for producing optical results of the first to the third state. However, the technique described above may also be applied to other high-speed display techniques with the mixed timing characteristic.

As described above, in an embodiment of the invention, a double-eye mixed vision is generated based on a pure left-eye's view and a pure right-eye's view, and a third state associated with double eyes is produced, wherein pixels in the third state are configured in analyzed image data and played as multiple image data. Thus, a 3D vision is presented, and the technique can be applied to the conventional polarized and shutter glasses. Thereby, the technique for adjusting pixel state can resolve the flickering problem and improve the image quality, brightness, and resolution in 3D display.

It will be apparent to those skilled in the art that various modifications and variations can be made to the structure of the invention without departing from the scope or spirit of the invention. In view of the foregoing, it is intended that the invention cover modifications and variations of this invention provided they fall within the scope of the following claims and their equivalents.

## Claims

1. A method for improving three-dimensional (3D) display quality, comprising:
converting (S 110) an original image data into a first image data and a second image data, wherein pixels in the first image data and the second image data at same coordinates are respectively indicated as P1(Z1) and P2(Z2), Z1 and Z2 respectively indicate a first state and a second state,·the pixel in the first state is used for generating a left-eye vision to a viewer, and the pixel in the second state is used for generating a right-eye vision to the viewer; and
analyzing (S120) the pixel P1(Z1) and the pixel P2(Z2), wherein when a data difference between the pixel P1(Z1) and the pixel P2(Z2) is smaller than a threshold, the pixel P1(Z1) is changed to P1(Z3), or the pixel P2(Z2) is changed to P2(Z3), or the pixels P1(Z1) and P2(Z2) are respectively changed to P1(Z3) and P2(Z3), wherein Z3 represents a third state, and the pixel in the third state is used for generating a double-eye vision to the viewer.

2. The method according to claim 1, further comprising:
defining a first block, wherein the first block comprises a plurality of pixels;
wherein when more than half of the pixels in the first block are in the first state (701), the entire first block is used for providing the left-eye vision to the viewer;
when more than half of the pixels in the first block are in the second state, the entire first block is used for providing the right-eye vision to the viewer; and
when more than half of the pixels in the first block are in the third state (703), the entire first block is used for providing the double-eye vision to the viewer.

3. The method according to claim 1, further comprising:
defining a first block, wherein the first block comprises a plurality of pixels;
wherein when the pixel at a center of the first block is in the first state (801), the entire first block is used for providing the left-eye vision to the viewer;
when the pixel at the center of the first block is in the second state, the entire first block is used for providing the right-eye vision to the viewer; and
when the pixel at the center of the first block is in the third state, the entire first block is used for providing the double-eye vision to the viewer.

4. The method according to claim 1, further comprising:
defining a first block, wherein the first block comprises a plurality of pixels;
wherein when all the pixels in the first block are in the first state, the entire first block is used for providing the left-eye vision to the viewer;
when all the pixels in the first block are in the second state, the entire first block is used for providing the right-eye vision to the viewer;
when a part of the pixels in the first block are in the first state and the other pixels in the first block are in the third state, the entire first block is used for providing the left-eye vision to the viewer; and
when a part of the pixels in the first block are in the second state and the other pixels in the first block are in the third state, the entire first block is used for providing the right-eye vision to the viewer.

5. The method according to claim 1, further comprising:
converting the original image data into a third image data and a fourth image data, wherein the first image data and the second image data are a first set of left and right eye image data, the third image data and the fourth image data are a second set of left and right eye image data, and pixels in the third image data and the fourth image data at the same coordinates are respectively indicated as P3(Z1) and P4(Z2); and
analyzing the pixel P3(Z1) and the pixel P2(Z2), wherein when a data difference between the pixel P2(Z2) and the pixel P3(Z1) is smaller than the threshold, the pixel P3(Z1) is changed to P3(Z3); or
analyzing the pixel P4(Z2) and the pixel P1(Z1), wherein when a data difference between the pixel P1(Z1) and the pixel P4(Z2) is smaller than the threshold, the pixel P4(Z2) is changed to P4(Z3).

6. The method according to claim 1, further comprising:
determining (S1020) whether a pixel is in the third state;
when the pixel is not in the third state, adjusting (S1040) a display characteristic of the pixel according to a first image adjustment data combination; and
when the pixel is in the third state, adjusting (S1030) the display characteristic of the pixel according to a second image adjustment data combination.

7. A method for improving 3D display quality, comprising:
determining (S310, S320, S330) whether to directly convert a corresponding pixel in a two-dimensional (2D) frame of a 2D depth data into an image data in a third state (S340) according to a depth information of the 2D depth data, wherein the image data in the third state is used for generating a double-eye vision to a viewer; and
when the corresponding pixel is not in the third state, converting (S350) an image data of the corresponding pixel in the 2D frame into an image data of a left-eye vision and an image data of a right-eye vision for 3D display according to the depth information of the 2D depth data.

8. The method according to claim 7, further comprising:
when a gray scale of the corresponding pixel in a depth map of the 2D depth data is within a predetermined range (S330), directly converting the corresponding pixel in the 2D frame into the image data in the third state (S340); and
when the gray scale of the corresponding pixel in the depth map is not within the predetermined range, converting (S350) the image data of the corresponding pixel in the 2D frame into the image data of the left-eye vision and the image data of the right-eye vision according to the gray scale of the corresponding pixel in the depth map.

9. The method according to claim 7, further comprising:
determining (S1020) whether a pixel is in the third state;
wherein when the pixel is not in the third state (S1040), a display characteristic of the pixel is adjusted according to a first image adjustment data combination; and
when the pixel is in the third state (S1030), the display characteristic of the pixel is adjusted according to a second image adjustment data combination.

10. A method for improving 3D display quality, comprising:
converting (S 150) an original image data into a first image data and a second image data, wherein the first image data and the second image data are respectively a matrix having M*N pixels, the pixels in i^{th} rows and j^{th} columns of the first image data and the second image data are respectively indicated as P1(i, j, Z1) and P2(i, j, Z2), i and j are integers, 1 ≦ i ≦ M, 1 ≦ j ≦ N, Z1 and Z2 respectively indicate a first state and a second state, the pixel in the first state is used for generating a left-eye vision to a viewer, and the pixel in the second state is used for generating a right-eye vision to the viewer; and
analyzing (S160) the pixel P1(i, j, Z1) and the pixel P2(i, j, Z2) in the i^{th} rows and the j^{th} columns, wherein when a data difference between the pixel P1 (i, j, Z1) and the pixel P2(i, j, Z2) is smaller than a threshold, the pixel P1(i, j, Z1) is changed to P1(i, j, Z3) or the pixel P2(i, j, Z2) is changed to P2(i, j, Z3), or the pixels P1(i, j, Z1) and P2(i, j, Z2) are respectively changed to P1 (i, j, Z3) and P2(i, j, Z3), wherein Z3 indicates a third state, and the pixel in the third state is used for generating a double-eye vision to the viewer.

11. The method according to claim 10, further comprising:
defining a first block, wherein the first block comprises a plurality of pixels;
wherein when more than half of the pixels in the first block are in the first state (701), the entire first block is used for providing the left-eye vision to the viewer;
when more than half of the pixels in the first block are in the second state, the entire first block is used for providing the right-eye vision to the viewer; and
when more than half of the pixels in the first block are in the third state (703), the entire first block is used for providing the double-eye vision to the viewer.

12. The method according to claim 10, further comprising:
defining a first block, wherein the first block comprises a plurality of pixels;
wherein when the pixel at a center of the first block is in the first state (801), the entire first block is used for providing the left-eye vision to the viewer;
when the pixel at the center of the first block is in the second state, the entire first block is used for providing the right-eye vision to the viewer; and
when the pixel at the center of the first block is in the third state, the entire first block is used for providing the double-eye vision to the viewer.

13. The method according to claim 10, further comprising:
defining a first block, wherein the first block comprises a plurality of pixels;
wherein when all the pixels in the first block are in the first state, the entire first block is used for providing the left-eye vision to the viewer;
when all the pixels in the first block are in the second state, the entire first block is used for providing the right-eye vision to the viewer;
when a part of the pixels in the first block are in the first state and the other pixels in the first block are in the third state, the entire first block is used for providing the left-eye vision to the viewer; and
when a part of the pixels in the first block are in the second state and the other pixels in the first block are in the third state, the entire first block is used for providing the right-eye vision to the viewer.

14. The method according to claim 10, further comprising:
converting the original image data into a third image data, wherein the third image data is a matrix having M*N pixels, a pixel in an i^{th} row and a j^{th} column of the third image data is indicated as P3(i, j, Z1), i and j are integers, 1 ≦ i ≦ M, 1 ≦ j ≦ N, and Z1 indicates the first state; and
analyzing image contents of the pixel P2(i, j, Z2) and a pixel P3(i, j, Z1) in the i^{th} rows and the j^{th} columns, wherein when a data difference between the pixel P2(i, j, Z2) and the pixel P3(i, j, Z1) is smaller than the threshold, the pixel P3(i, j, Z1) is changed to P3(i, j, Z3).

15. The method according to claim 10, further comprising:
determining (S1020) whether a pixel is in the third state;
when the pixel is not in the third state, adjusting (S1040) a display characteristic of the pixel according to a first image adjustment data combination; and
when the pixel is in the third state, adjusting (S1030) the display characteristic of the pixel according to a second image adjustment data combination.
